# EUROPEAN PATENT APPLICATION

(11) **EP 4 219 617 A1**
(43) Date of publication of application: **02.08.2023**
(21) Application number: 22154368.9
(22) Date of filing: 31.01.2022
(51) Int. Cl.: C08L 23/04

(54) **FUNCTIONALIZED-SILICONE BASED POLYOLEFIN PROCESSING AIDS**

(71) Applicant: Ingenia Polymers International S.A., 2520 Luxenbourg (LU)
(72) Inventor: Schneider, Alyssa Florence, Ontario, L8R1X3 (CA)
(74) Representative: Tomkins & Co

(57) **Abstract**

The invention provides a composition which can be used as a polymer processing aid in polyolefin extrusion processes, the composition comprising:
(a) a polyolefin; and
(b) 0.01 to 50 wt.-% of a functionalized poly(dialkyl siloxane) copolymer having the formula 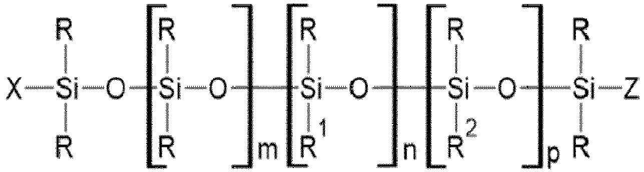 wherein R is an alkyl group containing 1 to 8 carbon atoms, R¹ and R² are the same or different and are either alkyl or poly(oxyalkylene) chains, terminated with a polar or charged functional group selected from an alcohol, a primary or secondary amine, or a combination of primary and secondary amines, an ammonium ion, or a phosphate;
where m is from 1 to 15,000, n is from 0 to 15,000, and p is from 0 to 5000;
where X is R or R¹;
where Z is R or R¹;
with the proviso that when either one or both of X and Z are R¹, then n and p are both 0, and when both X and Y are R, then n is at least 1...

## Description

### Technical Field

The present invention relates to the application of various functionalized silicone additives as polymer processing aids in polyolefin extrusion including film extrusion.

### Background

Industrial polyolefin melt processes - including blown film, cast film, sheet extrusion, profile extrusion, blow molding and fibre spinning - desire high throughputs in order to reduce costs associated with such processing. However, elevating polyolefin extrusion rates above a critical shear stress can lead to the onset of flow instabilities which manifest themselves as distortions of the extruded product. Hatzikiriakos, S. G., & Migler, K. B. (2012), Polymer Processing Additives for Melt Fracture Control in "Applied Polymer Rheology: Polymeric Fluids with Industrial Applications", First Edition, pp 29-58, describes a range of melt extrusion instabilities observed in industry. Above a critical volumetric flow rate, polyolefin extrusions exhibit distortions which increase in severity as the flow rate increases. These distortions are collectively referred to as *"melt fracture".* Above a first critical shear stress the polyolefin extrudate exhibits *"surface melt fracture",* also called *"sharkskin".* Sharkskin exhibits as a regular pattern of surface roughness or haze which is undesirable and limits the rate of extrusion. Extrusion at still higher rates can lead to a stick-slip instability or *"oscillating melt fracture".* Extrusion at even higher rates lead to gross, irregular distortions in the extrudate known as *"gross melt fracture".*

*"Polymer Processing Aids"* ("PPAs") are well known to those skilled in the art of polyolefin extrusion and film processing. The addition of low concentrations of PPAs to the polyolefin melt increases the critical shear stress at which sharkskin occurs, allowing for higher throughput rates. The most commercially relevant type of PPAs are fluoroelastomer and fluoroplastic (collectively "fluoropolymer") PPAs.

US Patent No. 3,125,547 discloses compositions of 0.005 to 2 wt.-% fluoropolymer in polyolefins. The compositions are effective in removing sharkskin from film and tube extrusions as compared to extrusions of the same polyolefins absent the fluoropolymer.

US Patent No. 4,855,360 discloses polyolefin compositions containing minor amounts of fluoropolymers in combination with a poly(oxyalkylene) polymer. Preferred poly(oxyalkylene) polymers disclosed are polyethylene glycols (PEG; CAS#: 25322-68-3) with a molecular weight of 1,000 to 20,000 g/mol. Such compositions show a synergistic effect of the poly(oxyalkylene) with the fluoropolymers of the invention. The examples of the document demonstrate that the combination of fluoropolymer and PEG shift the onset of melt fracture to higher shear rates than for fluoropolymer or PEG alone, reduce the time to remove melt fracture in blown film processing at a given apparent shear rate and reduce the pressure drop across the blown film die. The compositions allow lower use of fluoropolymer with poly(oxyalkylene) as compared to the use of fluoropolymer alone.

US Patent No. 4,863,983 discloses the use of organophosphite antioxidants in combination with fluoropolymer process aids. Combinations of phosphite antioxidants with fluoroelastomers are shown to delay the shear rate for the onset of melt fracture in a polyolefin as compared with the individual phosphite or fluoroelastomer.

US Patent No. 5,132,368 discloses a composition of a difficult to melt-process polymer containing 0.002 to 0.5 wt.-% of a fluoropolymer process aid containing at least 100 polar functional end groups, including acidic and quaternary ammonium cation end groups, per million carbon atoms. The compositions were shown to remove surface melt fracture and reduce extrusion pressure compared to compositions containing fluoropolymers without the acid end groups.

US Patent No. 6,642,310 discloses improved PPA efficiency through the use of dispersed fluoropolymer particles of a minimum particle size of 2 micron and the use of interfacial agents to help achieve the target particle size. The use of polycaprolactone (PCL; CAS#: 24980-41-4) as an interfacial agent with improved temperature resistance, compared to poly(oxyalkylene), is disclosed. Silicone-polyether copolymers were also mentioned as possible interfacial agents; however, these were not included in the examples.

Fluoropolymer PPAs, often formulated in combination with a synergist, are effective at low concentrations. In addition to delaying the onset of sharkskin to higher extrusion rates, such compositions can reduce extrusion pressure and extruder torque at a given output and can help reduce die lip build up (also called die drool). However, the use of fluoropolymers as process aids is currently being challenged due to concerns about their ecological and biological persistence. Thus, there is a need for a fluorine-free alternative polymer process aid to eliminate sharkskin melt fracture.

US Patent No. 4,535,113 discloses a composition of a polyolefin and a silicone additive. The silicone additive is a poly(dimethyl siloxane) ("PDMS") copolymer where the comonomer consists of a siloxane substituted with at least one pendant ethylene oxide, vicinal epoxy or amino group in a concentration sufficient to improve optical or mechanical properties. The compositions are shown to reduce melt fracture and pin striping where the silicone additive is present at 0.05% of the composition. However, no comparison to fluoropolymer process aids is provided.

US Patent No. 5,789,473 discloses a polyolefin composition containing 0.01 to 1 wt.-% of a hydroxy-functional di-organosiloxane having a molecular weight of at least 40,000 g/mol. The formulations of the invention are shown to reduce surface roughness of a film produced on a slit die as compared to controls not containing PPA additives and compared to conventional fluoroelastomer PPAs.

US Patent No. 9,896,575 describes the use of a silicone polyoxamide and a silicone-polyurethane diblock copolymer as PPAs in polyolefin film processing to eliminate melt fracture. PEG and PCL synergists were each separately added to improve the silicone copolymer PPA efficiency.

### Object of the Invention

Regulatory and market developments demand an alternative to fluoropolymer PPAs. While silicone copolymers are known as non-fluorinated PPAs in the art, their performance has heretofore fallen short of the performance of fluoropolymer PPAs. Thus, there is a need for a non-fluorinated processing aid for polyolefins which can delay the onset of sharkskin melt fracture to higher extrusion rates. There is a further need for such non-fluorinated process aids to be effective at low concentrations, as to not cause screw slippage or reduce extrusion outputs.

### Summary of the Invention

According to the present invention there is provided a composition of:
a. a polyolefin, and
b. 0.01 to 50 weight-% of the total composition of a functionalized poly(dialkyl siloxane) copolymer having the formula: 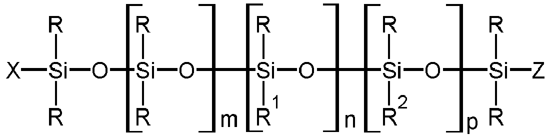
   wherein R is an alkyl group containing 1 to 8 carbon atoms, R¹ and R² are the same or different and are either alkyl or poly(oxyalkylene) chains, terminated with a polar or charged functional group selected from an alcohol, a carboxylate, a primary or secondary amine, or a combination of primary and secondary amines, an ammonium ion, or a phosphate;
   where m is from 1 to 15,000, n is from 0 to 15,000, and p is from 0 to 5000;
   where X is R or R¹;
   where Z is R or R¹;
   with the proviso that when either one or both of X and Z are R¹, then n and p are both 0, and when both X and Z are R, then n is at least 1.

In some embodiments the functionalised poly(dialkyl siloxane) copolymer is present in an amount of about 0.01 to 0.5 weight percent in a polyolefin. Such compositions are extrudable compositions useful in polyolefin extrusion processes including blown film, cast film, sheet extrusion, profile extrusion and extrusion blow molding. They are useful in the final extrusion process to remove or delay the onset of sharkskin. Such compositions are useful in removing sharkskin under a given shear condition or delaying sharkskin to higher extrusion rates as compared to polyolefins without the functionalized poly(dialkyl siloxane) copolymer. In other embodiments the functionalised poly(dialkyl siloxane) copolymer is present in an amount of about 0.5 to 50 weight percent in a carrier polymer, preferably 0.5 to 25 weight percent, more preferably 1-10% wt. Such compositions find use as masterbatches for use in polyolefin processing. The higher concentration range compositions are useful as an intermediate material to prepare the final composition. Such uses are well known to those of skill in the art.

The alkyl chain of R¹ and/or R² may contain 1 to 8 carbon atoms, more preferably 1 to 6 carbon atoms.

The poly(oxyalkylene) chain of R¹ and/or R² may be a polyethylene glycol chain with a molecular weight from 60 to 10,000 grams/mole.

The polar or charged functional group may be -OH; -COO⁻; -NH₂; -NR⁷H; -OPO(OH)₂; -N⁺R⁸H₂; -N⁺R⁸R⁹H or -N⁺R⁸R⁹R¹⁰, in which R⁷ is a substituted or unsubstituted alkyl group, R⁸, R⁹ and R¹⁰ which may be the same or different, are each independently H or an alkyl group. R⁷ may be a substituted or unsubstituted alkyl group containing 1 to 8 carbons, preferably 1 to 6 carbon atoms. R⁸, R⁹ and R¹⁰ may be a saturated or unsaturated alkyl chain containing 1 to 30 carbon atoms, suitably a saturated alkyl chain from 2 to 18 carbons in length. One or more of R⁸, R⁹ and R¹⁰ may be a methyl group.

The charged functional group may have a counterion associated with it, which can be any ionized halogen, most suitably Cl⁻ or Br⁻.

Preferably, m is from 1 to 5,000, more preferably 3 to 1,000 and still more preferably 100 to 600.

Preferably, n is from 0 to 5,000, more preferably 0 to 1,000, still more preferably 0 to 600, and most preferably from 3 to 200.

Preferably, p is from 0 to 5,000, more preferably 0 to 1000, still more preferably 0 to 600 and most preferably 3 to 200.

Suitably R is an alkyl group of 1 to 6 carbon atoms. In some embodiments R is methyl or ethyl.

Optionally the functionalized poly(dialkyl siloxane) copolymer contains enough crosslinks or chain-branching to provide increased shear thinning and elastic properties to the copolymer.

The composition may further comprise 0.01 to 50 weight-% of the total composition of a synergist which is a poly(oxyalkylene) or polycaprolactone of between 1,000 and 20,000 g/mol molecular weight or a polymeric liquid phosphite antioxidant of between 1,000 and 20,000 g/mol molecular weight. In some embodiments the synergist is present at a concentration of 0.01 to 0.5% wt, preferably from 0.01 to 0.2%, such embodiments being suitable as extrudable compositions for use in polyolefin extrusion processes. In other embodiments the synergist is present at a concentration of 1 to 50% wt, preferably from 5 to 25 weight %, such embodiments being suitable for use as masterbatches.

The composition may further comprise from 0.01 to 10% of the total composition of boron nitride. The boron nitride preferably has a mean particle size of less than 30 microns and more preferably less than 10 microns. In some applications of the present invention boron nitride is used at a concentration as low as 0.01 to 0.2%, preferably from 0.01 to 0.1% wt-%, such embodiments being suitable as extrudable compositions for use in polyolefin extrusion processes. In other embodiments boron nitride is present at a concentration of 0.5 to 50 wt%, preferably from 0.5 to 10 weight %, such embodiments being suitable for use as masterbatches.

The fluorine-free composition of the present invention is useful in reducing the occurrence or delaying the onset of melt fracture to higher throughputs in polyolefin conversion processes including extrusion and in particular blown and cast film extrusion, profile extrusion, extrusion blow molding and fibre spinning. The compositions are also useful in reducing extrusion pressure in various extrusion processes including blown and cast film extrusion, profile extrusion, extrusion blow molding and fibre spinning. The compositions are also useful in reducing die lip buildup in various extrusion processes.

### Detailed Description of the Invention

The invention relates to polyolefin compositions showing improved extrusion properties. In another aspect it relates to functionalized poly(dialkyl siloxane) copolymers used to improve the extrusion properties of polyolefin compositions. In another aspect it relates to the use of compositions of synergists and functionalized poly(dialkyl siloxane) copolymers to improve the extrusion properties of polyolefin compositions. In another aspect it relates to the use of compositions of boron nitride and functionalized poly(dialkyl siloxane) copolymers to improve the extrusion properties of polyolefin compositions. In a further aspect of the invention, it relates to a masterbatch useful for delivering accurate dosing of the functionalized poly(dialkyl siloxane) copolymers to a polyolefin composition.

The particulars of the invention shown herein are by way of example. They are meant to illustrate various embodiments of the invention and are not meant to limit the scope of the invention.

Given below are the condensed (by no means exhaustive) customary definitions known in the art, of which certain terms which may aid in the description of the invention.

'Masterbatch' is a concentrated mixture of pigments and/or additives which are encapsulated or dissolved during a heating and mixing process into a carrier polymer which is then cooled and cut into a granular shape. A masterbatch can be added to a base polymer in order to deliver the desired concentration of pigments or additives to the base polymer.

'Base Polymer' is the polymer which is to be colored, functionalized, stabilized or otherwise modified by additives or masterbatch. This may also be referred to as the 'letdown resin' by those familiar with the art.

'Carrier Polymer' is the polymer or polymer blend that, when combined with fillers, colorants or additives, will encapsulate them to form a masterbatch. The carrier polymer should preferably be miscible with the base polymer that is being modified by the masterbatch.

'Charged Functional Group' contains either a positive or negatively charged ion, or both a positively and negatively charged ion.

'Copolymer', is defined in the 'Compendium of Polymer Terminology and Nomenclature, IUPAC Recommendations, 2008' by RSC Publishing (hereafter referred to as the IUPAC Compendium) as a polymer derived from more than one species of monomer.

'Die Lip Buildup', is the accumulation of extrudate material on the exits of an extrusion die (the 'die lips').

"Melt Flow Rate' (MFR) is as defined in ASTM D1238-20. Units of measure are in grams per 10 minutes.

'Polar Functional Group' means a functional group containing two atoms with an electronegativity difference on the Pauling scale of 0.4 to 1.7.

'Terminal Group' is the chemical species at the end of a polymer chain or chain branch.

All percentages described in this document shall refer to the percentage on a weight basis of the total composition.

According to the present invention there is provided a composition of:
a. a polyolefin and
b. 0.01 to 50 weight-% of the total composition of a functionalized poly(dialkyl siloxane) copolymer having the formula I: 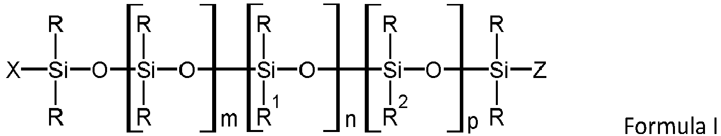
   wherein R is an alkyl group containing 1 to 8 carbon atoms, R¹ and R² are the same or different and are either alkyl or poly(oxyalkylene) chains, terminated with a polar or charged functional group selected from an alcohol, a carboxylate, a primary or secondary amine, or a combination of primary and secondary amines, an ammonium ion, or a phosphate;
   where m is from 1 to 15,000, n is from 0 to 15,000, and p is from 0 to 5000;
   where X is R or R¹;
   where Z is R or R¹;
   with the proviso that when either one or both of X and Z are R¹, then n and p are both 0, and when both X and Z are R, then n is at least 1.

In some embodiments of the invention X and Z are not the same.

Preferably, m is from 1 to 5,000, more preferably 3 to 1,000 and still more preferably 100 to 600.

Preferably, n is from 0 to 5,000, more preferably 0 to 1,000, still more preferably 0 to 600, and most preferably from 3 to 200.

Preferably, p is from 0 to 5,000, more preferably 0 to 1000, still more preferably 0 to 600 and more preferably 3 to 200.

Optionally the functionalized poly(dialkyl siloxane) copolymer contains enough crosslinks or chain-branching to provide increased shear thinning and elastic properties to the copolymer.

The composition may further comprise 0.01 to 50 weight-% of the total composition of a synergist which is a poly(oxyalkylene) or polycaprolactone of between 1,000 and 20,000 g/mol molecular weight or a polymeric liquid phosphite antioxidant of between 1,000 and 20,000 g/mol molecular weight.

The composition may further comprise from 0.01 to 10% of the total composition of boron nitride. The boron nitride may be present in an amount of 0.01 to 0.2 wt% in an extrudable composition. The boron nitride may be present in an amount of 0.5 to 10 wt% in a masterbatch. The boron nitride preferably has a mean particle size of less than 30 microns and more preferably less than 10 microns.

### The Polyolefin.

Polyolefins suitable for use in the composition include linear or branched polyolefins. In particular, polyolefins useful in the present invention include polypropylene, high-density polyethylene, linear low-density polyethylene, medium density polyethylene, polybutene, copolymers thereof, and including ethylene vinyl acetate copolymers, acid copolymers including ethylene-methacrylic acid and ethylene-acrylic acid copolymers, and combinations thereof. Such polyolefins may be produced by any means known in the art including free radical high-pressure processes and via catalysed processes including by chrome catalyst, Ziegler-Natta catalyst and single site catalysts including metallocene catalysts.

In some embodiments, the polyolefin may comprise a substantially linear polyolefin or alpha-olefin copolymer. Suitably, the polyolefin may comprise a substantially linear polyethylene or polyethylene copolymer with a density of between about 0.91 and 0.965 g/cm³.

In some embodiments, the polyolefin comprises a linear low-density polyethylene (LLDPE) with a density of between about 0.91 and 0.925 g/cm³ This may be selected from the group comprising: butene, hexene, octene, or other low (short-chain) alpha-olefin copolymers of polyethylene. Examples of such LLDPEs include LyondellBasell Petrothene GA502024 and ExxonMobil Chemical Company LL 1001X31. Narrow molecular weight distribution, low melt flow rate (MFR < 10 g/10 min) metallocene linear low-density polyethylene copolymers are known to be especially prone to sharkskin and can benefit from the use of process aid compositions of the present invention.

In some embodiments, the polyolefin comprises a medium-density polyethylene (MDPE) with a density of between about 0.925 and 0.940 g/cm³. This may be selected from the group comprising: butene, hexene, or other low alpha-olefin copolymers of polyethylene.

In some embodiments, the polyolefin comprises a high-density polyethylene (HDPE) with a density of equal to or greater than about 0.940 g/cm³. This may be selected from the group comprising: butene, hexene, or other low alpha-olefin copolymers of polyethylene. It may also be a homopolymer HDPE. Examples of such a HDPE includes Nova Chemicals Surpass^{®} HPs167-AB.

In some embodiments, the polyolefin may comprise a branched low-density polyethylene (LDPE) with a density of between about 0.91 and 0.94 g/cm³. LDPE is not particularly prone to sharkskin melt defects, but LDPE is often blended with linear polyolefins in compositions of the present invention. LDPEs of the present invention include LyondellBasell Petrothene NA219000.

In some embodiments, the polyolefin may be a blend of polyolefins including a lower density plastomer or elastomer component. Such lower density polyolefins may be used to impart specific properties in film applications including toughness or sealing properties.

In some embodiments, the polyolefin may be a polypropylene. Such polypropylenes can include homopolymer polypropylene (hPP), random copolymer polypropylene (RCP), impact copolymer polypropylene (ICP) or blends thereof. Examples of polypropylenes of the present invention include Braskem FF030F2.

### The Functionalized Poly(dialkyl siloxane)

The functionalized poly(dialkyl siloxane) copolymer of the present invention has the formula I shown above.

In one embodiment of formula I, R is a methyl group giving the structure:-

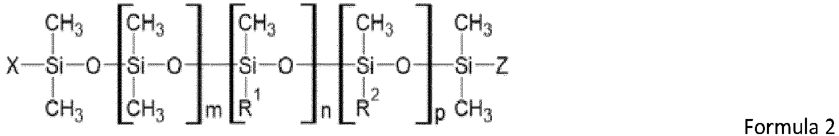

In another embodiment of formula I X and Z are both methyl groups, providing a PDMS copolymer with pendant functional groups and having the structure:- 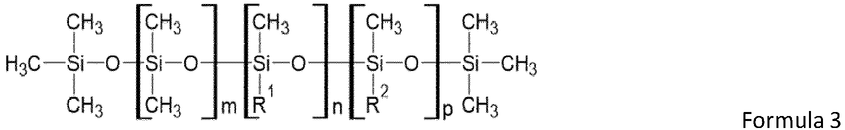 In another embodiment of formula I X and Z are both R¹ and n and p are 0, providing PDMS copolymer with telechelic functional groups and having the structure:- 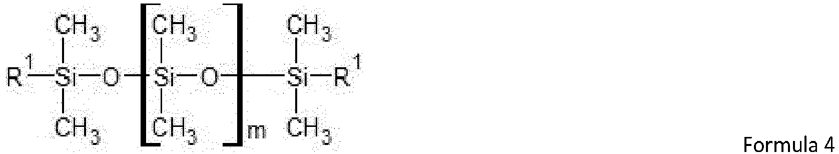 In another embodiment of formula I X is a methyl group, Z is R¹ and both n and p are 0, providing a PDMS diblock copolymer of the structure:-

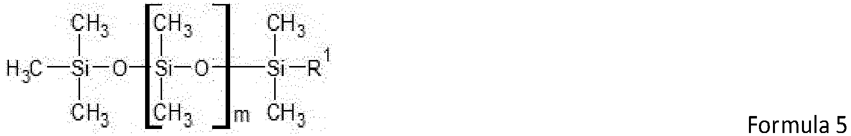

R¹ may be an alcohol terminated poly(oxyalkylene). In one embodiment of formula I, R, X and Z are methyl groups, p is 0 and R¹ is an alcohol terminated poly(oxyalkylene) giving the structure:- 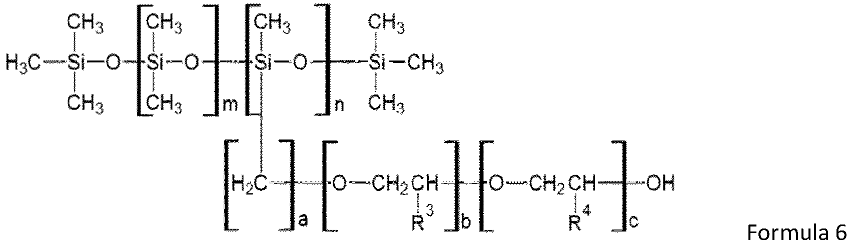 wherein R³ and R⁴ are the same or different and are H or CH₃, and a is from 1 to 200, b, and c are from 0 to 500, m may be from 1 to 15,000 and n may be from 1 to 15,000. In another embodiment m may be from 1 to 5000 and n may be from 1 to 5000. In another embodiment m may be from 100 to 400. n may be from 10 to 200. R³ may be H. R⁴ may be hydrogen or CH₃. a may be 3. b and c may be from 1 to 50.

In another embodiment of formula I, X and Z are both R¹, n and p are both 0, and R¹ is an alcohol terminated poly(oxyalkylene) giving the telechelic structure: 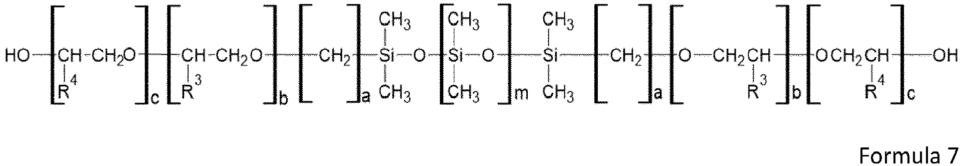 wherein R³ and R⁴ are the same or different and are H or CH₃, m is from 1 to 15,000 and a is from 1 to 200, b, and c are from 0 to 500. m may be from 1 to 5000. In another embodiment m is from 100 to 400. R³ may be hydrogen. R⁴ may be hydrogen or CH₃. a may be 3. b and c may be from 1 to 50.

In another embodiment of formula I, n and p are 0, X is CH₃, and Z is a In another embodiment of the present invention n and p are 0, X is CH₃, and Z is a quaternary terminated poly(oxyalkylene) giving the structure: 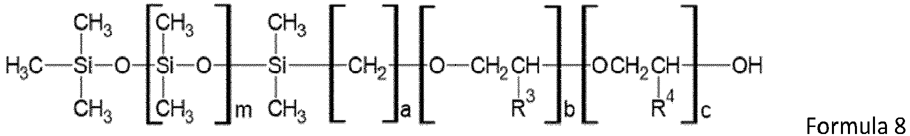 wherein R³ and R⁴ are the same or different and are H or CH₃, m is from 1 to 15,000 and a is from 1 to 200, b, and c are from 0 to 500. m may be from 1 to 5000. In another embodiment, m is from 100 to 400. R³ may be hydrogen. R⁴ may be hydrogen or CH₃. a may be 3. b and c may be from 1 to 50.

In formula I R¹ may be a quaternary terminated poly(oxyalkylene). For example, in another embodiment of formula I X and Z are CH₃, p is 0, R¹ is a quaternary ammonium terminated poly(oxyalkylene) containing a chlorine counterion giving the structure: 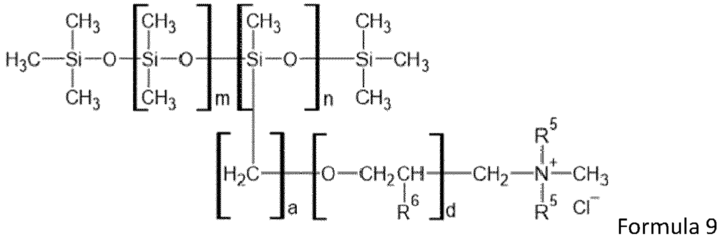 wherein R⁶ is H or OH, R⁵ is a saturated or unsaturated alkyl chain containing 1 to 30 carbon atoms, m is from 1 to 15,000, n is from 1 to 15,000 and a and d are from 1 to 200. m may be from 1 to 5000. n may be from 1 to 1000. In another embodiment m is from 100 to 400. n may be from 3 to 100. R³ may be OH. R⁵ may be a saturated alkyl chain from 2 to 18 carbons in length. a may be 3. d may be 1.

In another embodiment of formula I, X and Z are both R¹, n and p are both 0, and R¹ is a quaternary ammonium terminated poly(oxyalkylene) giving the telechelic structure: 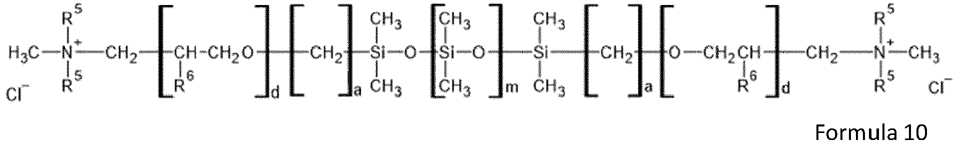 wherein R³ is H or OH, R⁵ is a saturated or unsaturated alkyl chain containing 1 to 30 carbon atoms, m is from 1 to 15,000 and a and d are from 1 to 200. m may be from 1 to 5000. In another embodiment m may be from 100 to 400. R³ may be OH. R⁵ may be a saturated alkyl chain from 2 to 18 carbons in length. a may be 3. d may be 1.

In formula I R¹ may be an alkyl or poly(oxyalkylene) chain, terminated with a primary or secondary amine, or a combination thereof. For example, in another embodiment of formula I X and Z are CH₃, p is zero and R¹ contains both primary and secondary amino groups giving the structure: 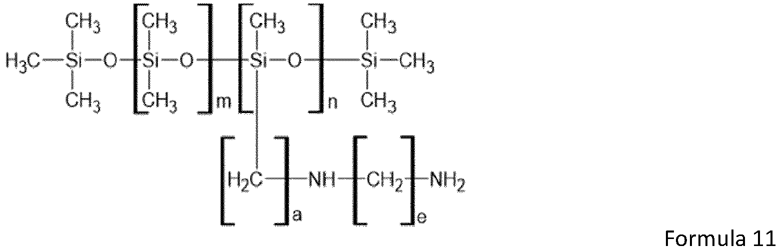 wherein m is from 1 to 15,000, n is from 1 to 15,000 and a and e are from 1 to 200. m may be from 1 to 5000. n may be from 1 to 1000. In another embodiment m may be from 100 to 400. n may be from 20 to 200. a may be 3. e may be 2.

In another embodiment of formula I, n and p are zero, and X and Z are the same and contain both primary and secondary amino groups: 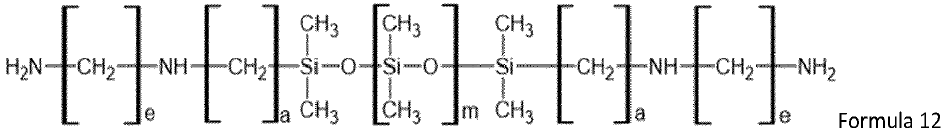 wherein m is from 1 to 15,000 and a and e are from 1 to 200. m may be from 1 to 5000. In another embodiment m is from 100 to 400. a may be 3. e may be 2.

In another embodiment of formula I, the functionalized poly(dialkyl siloxane) R¹ is a poly(oxyalkylene) chain terminated with a phosphoric acid group giving a structure of the general formula: 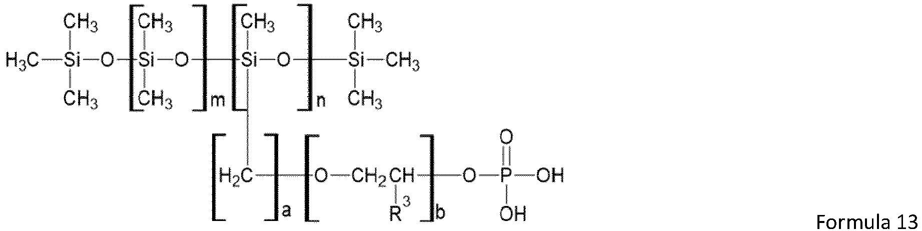 wherein R³ is H or CH₃, m is from 1 to 15,000, n is from 1 to 15,000 and a and b are from 1 to 200. m may be from 1 to 5000. n may be from 1 to 1000. In another embodiment m may be from 100 to 400. n may be from 3 to 100. R³ may be H. a may be 3. b may be from 1 to 20.

In another embodiment of formula I, n and p are zero, and X and Z are the same and contain poly(oxyalkylene) chains terminated with phosphoric acid groups giving the structure: 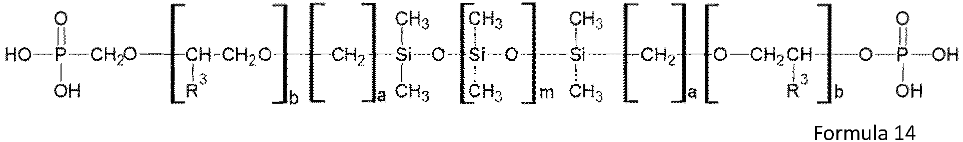 wherein R³ is H or CH₃, m is from 1 to 15,000, and a and b are from 1 to 200. m may be from 1 to 5000. In another embodiment m may be from 100 to 400. R³ may be H. a may be 3. b may be from 1 to 20.

In some embodiments the functionalized poly(dialkyl siloxane) copolymer contains a minimum number of crosslinks or branches to provide an increase in viscosity, an increase in shear thinning and an increase of elasticity.

In preferred embodiments of the invention the molecular weight of the functionalized poly(dialkyl siloxane) copolymer has a molecular weight of greater than 10,000 grams per mol. In a more preferred embodiment of the invention the molecular weight of the functionalized poly(dialkyl siloxane) copolymer is greater than 20,000 gram/mol. This molecular weight can be achieved by any particular combination of increasing the chain length poly(dialkyl siloxane) component (increasing m in the above structures), and increasing the contribution to molecular weight of the functionalized comonomer. In preferred embodiments of the present invention the contribution of the poly(dialkyl siloxane) component to molecular weight is greater than 25% on a weight basis.

Further exemplary compounds according to Formula I include the following:

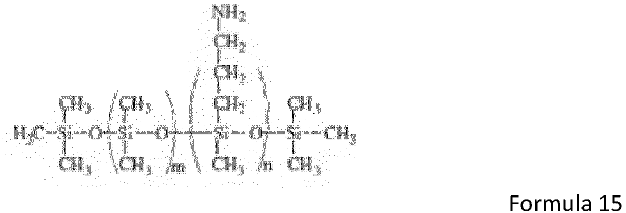

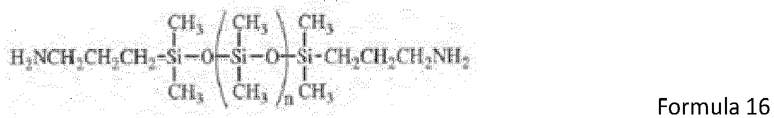

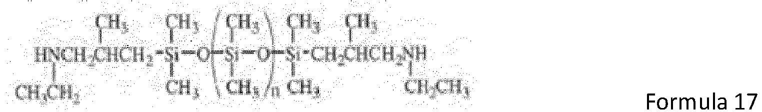

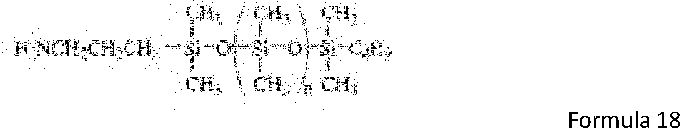

### The Synergist

The composition of the present invention optionally contains a synergist. The synergist agent of the present invention is either a poly(oxyalkylene) also known as a poly(oxyalkylene), polycaprolactone, or a polymeric liquid phosphite antioxidant.

In one embodiment of the present invention the poly(oxyalkylene) is a polyethylene glycol. In a preferred embodiment of the present invention, the polyethylene gylcol has a molecular weight of 1,000 to 20,000 grams/mole. In a more preferred embodiment of the present invention the polyethylene glycol has a molecular weight of 2000 to 10,000 grams/mole. An example polyethylene glycol useful in the present invention is Dow Carbowax 8000.

In another embodiment of the present invention the synergist is a polycaprolactone. In a preferred embodiment of the present invention, the polycaprolactone has a molecular weight of 1,000 to 20,000 grams/mole. In a more preferred embodiment of the present invention the polycaprolactone has a molecular weight of 2,000 to 10,000 grams/mole. An example polycaprolactone useful in the present invention is Perstop Capa 2403D.

In another embodiment of the present invention the synergist is a polymeric liquid phosphite antioxidant. US Patent No. 8,563,637 and US 8,981,042 disclose polymeric liquid polyphosphites useful in the present invention. Examples of polymeric liquid phosphites useful in the present invention are Dover Chemical Corp (Dover, OH) Doverphos LGP-11 and Doverphos LGP-12.

### Boron Nitride

In another embodiment of the present invention the composition contains boron nitride. The boron nitride is present in the composition in an amount from 0.01 to 10 wt.-%. The boron nitride preferably has a mean particle size less than 30 microns. The boron nitride more preferably has a mean particle size of less than 10 microns. An example boron nitride useful in the present invention is Saint-Gobain CarboTherm PCTF5. The boron nitride may be used in conjunction with the synergists described above.

### Other Additives

The compositions of the present invention may also contain additional polymer additives as are known in the art. Additional polymer additives which can be added to the composition of the present invention, include, but are not limited to fillers, pigments, slip additives, anti-blocking additives, hindered amine light stabilizers, ultraviolet light absorbers, antioxidants including hindered phenol and phosphite antioxidants, and antistatic agents.

In some embodiments glycol solvents are added to the mixture. These glycol solvents can include, but are not limited to, propylene glycol and hexylene glycol. In relation to the silicone copolymer these glycol additives constitute 0-50%, more preferably 20-30%. In relation to the total polyolefin composition these glycols constitute less than 0.2 wt.-%, more preferably less than 0.05%.

### Theory

Without wishing to be constrained by theory, it is believed that the functionalized siloxane process aids of the present invention function similarly to the fluoropolymer processing aids. To be effective, the functional poly(dialkyl siloxane) copolymers of the present invention must coat the extrusion die wall, in particular the die exit, and they must induce a slip velocity between the functional poly(dialkyl siloxane) copolymer coatingand the polyolefin being processed. The functional poly(dialkyl siloxane) copolymer processing aids of the present invention are believed to efficiently achieve this. The functional poly(dialkyl siloxane) copolymers processing aids contain a polar or charged terminal functional group on an alkyl or poly(oxyalkylene) chain which promotes bonding to the metal oxide surface of an extrusion die. The poly(dialkyl siloxane) block of the functionalized poly(dialkyl siloxane) copolymer provides a low energy surface on which the polyolefin slips. The coating efficiency of the functionalized poly(dialkyl siloxane) copolymer of the present invention is believed to be a function of molecular weight and structure, which affects its viscosity and elasticity. It is believed that the viscosity of the functionalized poly(dialkyl siloxane) copolymer should be similar to that of the polyolefin at the temperature and shear rate range at which it is being processed. The functionalized poly(dialkyl siloxane) copolymer should preferably be dispersed in the polyolefin in an average dispersed particle size of 2 to 10 microns at the die in order to promote efficient coating of the die wall. This particle size is achieved through a combination of the selection of a functionalized poly(dialkyl siloxane) copolymer of suitable viscosity, elasticity as well as masterbatch formulation and processing conditions. The use of a synergist can help reduce the amount of shear on the functionalized poly(dialkyl siloxane) copolymer and thus maintain sufficient average particle size. In order to provide this function, the synergist should have a viscosity under the processing conditions which is less than that of the functionalized poly(dialkyl siloxane) copolymer. The polyethylene glycol and polycaprolactones useful in the present invention are believed to perform this function. While the polymeric liquid phosphites of the present invention are also believed to perform this function, they are believed to offer an additional benefit in that they mitigate oxidative degradation of the polymer. Reduced oxidation of the polyolefin is expected to reduce the frequency of crosslinked gels as well as reduce oxidized polymer on the metal surfaces of processing equipment.

Again, without wishing to be constrained by theory, the boron nitride of the present invention is believed to work via a different mechanism than the synergists. In addition to showing some improvement in the delay of sharkskin, boron nitride may also decrease the severity of gross melt fracture.

### End use Application and Masterbatches

Compositions of the present invention are useful in polyolefin extrusion processes including blown film, cast film, sheet extrusion, extrusion blow molding, fibre spinning, and profile extrusion in reducing or eliminating melt fracture including sharkskin as described in the foregoing. As little as 0.01 to 0.5% of the functionalized poly(dialkyl siloxane) copolymer is required in the polyolefin composition in order to reduce or delay melt fracture. Preferred compositions contain from 0.01 to 0.2% of the functionalized poly(dialkyl siloxane) copolymer in the polyolefin. In some applications of the present invention a synergist is used at a concentration as low as 0.01 to 0.5%, preferably from 0.01 to 0.2%. In some applications of the present invention boron nitride is used at a concentration as low as 0.01 to 0.2%, preferably from 0.01 to 0.1% in conjunction with the functionalized poly(dialkyl siloxane) copolymer.

Compositions of the present invention can be prepared by polyolefin producers in their post extrusion pelletizing operations. Pelletizing is typically achieved by extrusion through a die via a twin-screw extruder, melt pump or similar equipment as is known in the art. Numerous techniques can be employed to introduce the functionalized poly(dialkyl siloxane) copolymer, optional synergist, and optional boron nitride component, as well as other polymer additives as is know in the art to the post reactor polyolefin stream. High viscosity liquid, or gum, or waxy solid forms of the functionalized poly(dialkyl siloxane) copolymers can be dosed directly to the polyolefin stream where they are mixed into the polymer prior to pelletization. The storage, handling and dosing systems for the functionalized poly(dialkyl siloxane) copolymers, synergist and boron nitride are well known in the art. However, in some post-reactor pelletizing operations the required feeding systems may not be available, or it may be otherwise desirable to handle and the feed functionalized poly(dialkyl siloxane) copolymers and optional synergist agent, boron nitride in the form of a single solid pellet. This can be achieved by the preparation of a masterbatch of a higher concentration of the functionalized poly(dialkyl siloxane) copolymers and optional additional components in a polyolefin carrier polymer.

The use of masterbatches is well known in the art. Producing a masterbatch of a higher concentration of the functionalized poly(dialkyl siloxane) copolymer and optional additional components to be let down into the base polymer to achieve the final composition can improve the accuracy of dosing of the active components.

Compositions of the present invention useful as masterbatches for polyolefins contain from 0.5 to 50% of the functionalized poly(dialkyl siloxane) copolymers in a polyolefin carrier polymer. In some embodiments the masterbatch is comprised of 0.5 to 25% of the functionalized poly(dialkyl siloxane) copolymers in a polyolefin carrier polymer. Preferred compositions useful as masterbatches contain from 1 to 10% functionalized poly(dialkyl siloxane) copolymers.

Some compositions of the present invention useful as masterbatches contain a synergist in conjunction with the functionalized poly(dialkyl siloxane) copolymers in a polyolefin carrier. In one embodiment of the present invention the masterbatch composition contains from 0.5 to 50% of the synergist. In another embodiment of the present invention the masterbatch composition contains from 0.5 to 25% of the synergist. In another embodiment the masterbatch contains from 1 to 10% of the synergist. The ratio of synergist to functionalized poly(dialkyl siloxane) copolymer in the composition useful as a masterbatch is in the range of 1:9 to 9:1. The preferred ratio of synergist to functionalized poly(dialkyl siloxane) copolymer in the composition useful as a masterbatch is in the range of 1:9 to 3:1. Where both the synergist and functionalized poly(dialkyl siloxane) copolymer are present in the masterbatch composition of the present invention their combined concentration should be less than 50% in the polyolefin, and preferably less than 25%.

Some compositions of the present invention useful as masterbatches contain boron nitride in conjunction with the functionalized poly(dialkyl siloxane) copolymers in a polyolefin carrier polymer. In one embodiment the masterbatch contains from 0.5 to 25% boron nitride. In another embodiment of the present invention the composition contains from 1 to 10% of boron nitride.

The polyolefin carrier polymer used in the masterbatch compositions of the present invention is compatible with the base polymer in which the masterbatch will be let down. Preferably the polyolefin carrier polymer used in the masterbatch composition is miscible with the base polymer. By way of example a polyethylene carrier is a preferred carrier polymer for a masterbatch of the present invention used to modify a polyethylene base polymer. If the base polymer is an LLDPE, then the polyethylene carrier polymer of the masterbatch is preferably a polyethylene, and more preferably an LLDPE.

The use of a masterbatch composition of the present invention allows polyolefin producers accurately prepare compositions of the present invention and thereby sell a fully formulated polyolefin with good processing characteristics to downstream converters.

In some cases the downstream converter may not want to purchase a fully formulated polyolefin. The use of a masterbatch allows converters to customize the composition of a base polymer to meet the particular needs of their converting process. The masterbatch allows the converter to adjust the active level of functionalized poly(dialkyl siloxane) copolymers and optional synergist and boron nitride in the polyolefin to meet the particular requirements of individual processing equipment and products. The use of a masterbatch also allows the converter to 'shock' their system for a short period of time with higher levels of functionalized poly(dialkyl siloxane) copolymer to reduce the conditioning time required to remove sharkskin melt fracture.

Thus the use of a masterbatch of higher concentrations of the functionalized poly(dialkyl siloxane) copolymers and optional components in the polyolefin compositions of the present invention are useful to both the polyolefin producer and the downstream converter.

The compositions of the present invention are differentiated from the prior art in that they are fluorine free, achieve improved performance in reducing the appearance of, and / or delay the onset of sharkskin, at concentrations comparable to those of fluoropolymer processing aids. The compositions of the present invention may also offer additional benefits in polyolefin extrusion including reduced extrusion pressures, increased output and reduced die lip buildup.

### Examples

The following examples are presented for illustrative purposes only and are not intended to limit the scope of the invention.

**Table 1: List of Materials**

| Identifier | Manufacturer and Grade | Description |
|---|---|---|
| LLDPE1 | Exxon Mobil LL 1001X31 | Butene copolymer LLDPE, 1 MFR (190 °C, 2.16 KG), 0.918 g/cc density |
| LLDPE2 | LyondellBasell Petrothene GA502024 | Butene copolymer LLDPE, 2 MFR (190 °C, 2.16 KG), 0.918 g/cc density |
| PDMS1 | Wacker Genioplast pellet P Plus | 70% UHMW PDMS |
| | | 30% fumed silica |
| FKM1 | 3M Dynamar FX5920A | Fluoroelastomer and PEG process aid containing a small amount of inorganic partitioning agent. |
| PDMS-CO1 | Wacker Genioplast Pellet 345 | PDMS-polyurethane copolymer |
| PDMS-CO2 | Wacker Fluid L060 | PDMS-co-PEG |
| | | 1300 cPs |
| M1 | Siltech P102b | 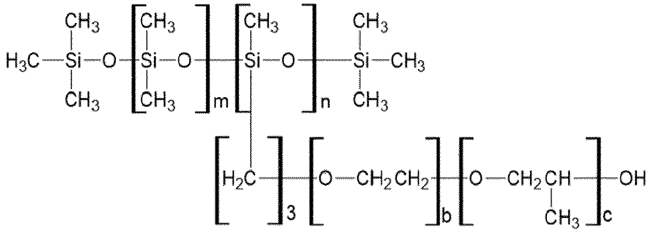 |
| | | 44,000 g/mol |
| | | 45,000 cPs |
| M3 | Siltech Silsurf T812 | 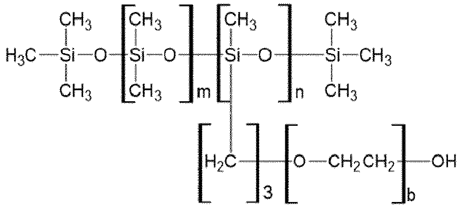 |
| | | 25,000 g/mol |
| | | 11,500 cPs |
| | | m=146, n=22, b=12 |
| M4 | Siltech Silsurf CR1115 | Slightly crosslinked version of P102b & P103b |
| | | 5,000 cPs |
| M5 | Siltech Silquat J15-B | 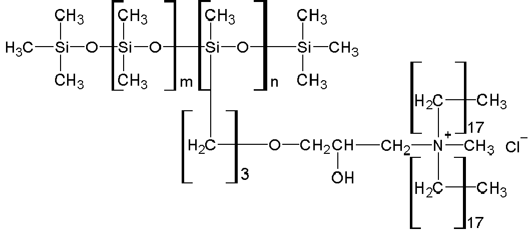 |
| | | 18,000 g/mol |
| | | 6,000 cPs |
| M6 | Siltech Silquat CR4000 | Slightly crosslinked version of: |
| | | 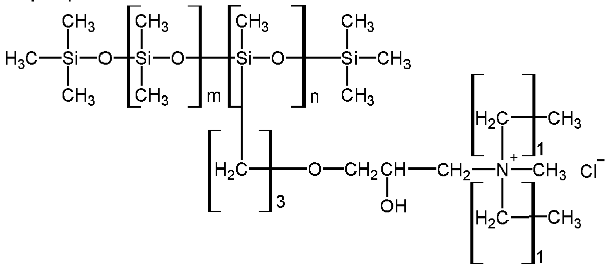 |
| | | 50,000 cPs |
| IF1 | Dow Carbowax Sentry PEG 8000 NF Granular | Poly(ethylene)glycol |
| | | 8,000 g/mol |
| IF2 | Dover Chemical Doverphos LGP-12 | Liquid polymeric phosphite stabilizer |
| BN | St. Gobain BN PCTF5 | Boron Nitride |
| | | D50 (mean) = 7 microns |
| AO | BASF Irganox B 900 | Antioxidant blend of |
| | | 80% Irgafos 168 |
| | | 20% Irganox 1076 |

The list of materials used in the control, comparative examples and examples of the current invention are listed in Table 1.

In order to improve the accuracy of dosing, the functionalized poly(dialkyl siloxane) copolymers and/or synergists and/or boron nitride were prepared as masterbatches according to the formulations found in Table 2. LyondellBasell Petrothene GA502024 received in pellet form was ground to a 12 Mesh top size and was used as the carrier polymer for all of the masterbatches. 15 lbs. of each recipe was weighed out batchwise to two decimal accuracy on a digital scale. For additives present at quantities less than 1 lb. mass was measured in grams to two decimal place accuracy on a digital scale. The weighed batches were tumble blended for 30 seconds if all additives were solid and high speed mixed for 5 minutes if a liquid component was present in the recipe.

The mixed batches were fed by a loss in weight feeder to a Coperion ZSK30 corotating twin screw extruder; equipped with a 30 mm diameter, 36length/diameter (L/D) set of screws. A low-shear screw design was used consisting of 8 kneading block sections including 1 reverse flight element. The ZSK30 extruder is equipped with 6 barrel sections. From the feed section to the final barrel section before the die, the barrel zones were set to temperatures of 110-140-160-170-170-170 °C. The die temperature was set to 170 °C. All masterbatches were extruded at 350 RPM at a rate of 60 lbs /hr.

**Table 2: Masterbatch Recipes**

| Identifier | Siloxane copolymer or Fluoropolymer | Additional Component | AO (B900) | LLDPE1 (Carrier Polymer) |
|---|---|---|---|---|
| CO-MB1 | 3% FKM1 | - | 0.1% | 96.9% |
| CO-MB3 | 4.5% PDMS-CO1 | 0.5% IF1 | 0.1% | 94.9% |
| CO-MB4 | 3.56% PDMS-CO1 | 1.44% IF1 | 0.1% | 94.9% |
| CO-MB5 | 5% PDMS-CO2 | - | 0.1% | 94.9% |
| MB1 | 6% M1 | - | 0.1% | 93.9% |
| MB2 | 3.5% M1 | 0.5% IF1 | 0.1% | 95.9% |
| MB3 | 3.5% M1 | 0.5% IF2 | 0.1% | 95.9% |
| MB6 | 5% M3 | - | 0.1% | 94.9% |
| MB7 | 4.37% M3 | 0.63% IF1 | 0.1% | 94.9% |
| MB8 | 4% M4 | - | 0.1% | 95.9% |
| MB9 | 6% M5 | - | 0.1% | 93.9% |
| MB10 | 6% M6 | - | 0.1% | 93.9% |
| MB15 | - | 3% BN | 0.1% | 96.9% |

Surface melt fracture (sharkskin) elimination was evaluated on a Lung Meng AH-42 blown film line equipped with a 42 mm single screw extruder (L/D = 24:1), a 2.7" diameter die with a die gap of 0.025", and external bubble cooling. Exxon Mobil LL 1001X31 (LLDPE1) was used as the control polymer and as the base polymer for all comparative examples and examples of the present invention. LLDPE1 at 100% concentration was extruded under the temperature profile 150-180-185-185 °C with die temperature of 185 °C, a screw speed of 32 RPM at a rate of 19.8 lbs. per hour corresponding to an apparent shear rate of 219 s⁻¹. Under these conditions LLDPE1 was found to exhibit 100% sharkskin.

The PPA masterbatches of Table 2 were dry mixed with LLDPE1 pellets according to the recipes in Table 3 to make extrudable compositions. In some experiments 5000 ppm of diatomaceous earth (DE) was added to the blend via a separate 50% masterbatch of DE in LLDPE2 (Ingenia Polymers IP1052). DE is often used in film formulations as an antiblock and is known to be antagonistic to traditional fluoropolymer PPAs. The LLDPE1 control was first run to establish 100% melt fracture as above. The hopper of the film line extruder was allowed to run empty, and then immediately charged with the formulation to be evaluated in Table 3 and a timer was simultaneously started. At 10-minute intervals a film sample was collected for 1 minute and the production rate was recorded in lbs. per hour. The film was laid flat on a light table in order to facilitate visual observation of the areas of the film containing melt fracture. In many cases the melt fracture cleared initially in bands. The widths of the film exhibiting melt fracture were marked and measured. The sum of the widths of areas containing film defects divided by the total width of the film provides the percent melt fracture. In some cases, the melt fracture exhibited decreasing intensity prior to being eliminated. Such areas of decreased intensity of melt fracture were still considered and measured as melt fracture.

After each evaluation of one of the compositions of Table 3, 15 kg of a 50% masterbatch of the DE masterbatch (Ingenia Polymers IP1052) was run through the film line to scour the PPA from the metal surfaces of the die and extruder. Following this purge, LLDPE1 was run through the film line for 1 hour to remove any remaining diatomaceous earth (DE) and reestablish 100% melt fracture before proceeding to the next evaluation.

The results of the control, comparative examples and examples of the present invention can be found in Table 3.

**Table 3 Comparative and Examples of Extrudable Compositions and Time-to-clear Results**

| Example | Masterbatch & LDR | Resulting Composition^{∗} | DE | Melt Fracture after 1 hr (%) | Change in output after 1 hr (%) |
|---|---|---|---|---|---|
| CE1 | 2% CO-MB1 | 600 ppm FKM1 (5920A) | No | 0% | 27 |
| | | 20 ppm AO | | | |
| | | 1.938% LLDPE2 | | | |
| | | Balance LLDPE1 | | | |
| CE2 | | 600 ppm FKM1 (5920A) | Yes | 0 | 7 |
| | 2% CO-MB1 | 20 ppm AO | | | |
| | 1% IP1052 | 0.5% DE | | | |
| | | 1.938% LLDPE2 | | | |
| | | Balance LLDPE1 | | | |
| CE4 | | 540 ppm PDMS-CO1 (Genioplast 345) | Yes | 39 | -7 |
| | | 60 ppm IF1 (PEG) | | | |
| | 1.2% CO-MB3 | 12 ppm AO | | | |
| | 1% IP1052 | 0.5% DE | | | |
| | | 1.639% LLDPE2 | | | |
| | | Balance LLDPE1 | | | |
| CE5 | 1.2% CO-MB4 | 430 ppm PDMS-CO1 (Genioplast 345) | Yes | 14 | 7 |
| | | 173 ppm IF1 (PEG) | | | |
| | | 12 ppm AO | | | |
| | | 0.5% DE | | | |
| | | 1.639% LLDPE2 | | | |
| | | Balance LLDPE1 | | | |
| CE6 | 2% CO-MB5 | 1000 ppm PDMS-CO2 (L060) | No | 55 | -27 |
| | | 20 ppm AO | | | |
| | | 1.898% LLDPE2 | | | |
| | | Balance LLDPE1 | | | |
| C1 | 4% MB15 | 1200 ppm BN | No | 100 | -6 |
| | | 40 ppm AO | | | |
| | | 3.876% LLDPE2 | | | |
| | | Balance LLDPE1 | | | |
| E2 | 4% MB1 | 2400 ppm M1 (P102b) | No | 28 | -12 |
| | | 40 ppm B900 | | | |
| | | 3.756% LLDPE2 | | | |
| | | Balance LLDPE1 | | | |
| E3 | | 2400 ppm M1 (P102b) | No | 13 | -9 |
| | 4% MB1 | 600 ppm BN | | | |
| | 2% MB15 | 60 ppm AO | | | |
| | | 5.694% LLDPE2 | | | |
| | | Balance LLDPE1 | | | |
| E5 | 6% MB2 | 2100 ppm M1 (P102b) | No | 6 | -3 |
| | | 300 ppm IF1 (PEG) | | | |
| | | 60 ppm AO | | | |
| | | 5.754% LLDPE2 | | | |
| | | Balance LLDPE1 | | | |
| E7 | 3% MB3 | 1050 ppm M1 (P102b) | No | 7 | -18 |
| | | 150 ppm IF2 (LGP12) | | | |
| | | 30 ppm AO | | | |
| | | 2.877% LLDPE2 | | | |
| | | Balance LLDPE1 | | | |
| E10 | | 1800 ppm M3 (T812) | Yes | 0 | -6 |
| | 3.6% MB6 | 36 ppm AO | | | |
| | 1% IP1052 | 0.5% DE | | | |
| | | 3.916% LLDPE2 | | | |
| | | Balance LLDPE1 | | | |
| E11 | | 1000 ppm M3 (T812) | Yes | 0 | 25 |
| | 2% MB6 | 20 ppm AO | | | |
| | 1% IP1052 | 0.5% DE | | | |
| | | 2.398% LLDPE2 | | | |
| | | Balance LLDPE1 | | | |
| E12 | 1.2% MB6 | 600 ppm M3 (T812) | Yes | 9 | 23 |
| | | 12 ppm AO | | | |
| | | 0.5% DE | | | |
| | | 1.639% LLDPE2 | | | |
| | | Balance LLDPE1 | | | |
| E13 | 3.6% MB7 | 1573 ppm M3 (T812) | Yes | 0 | 8 |
| | | 227 ppm IF1 (PEG) | | | |
| | | 36 ppm AO | | | |
| | | 0.5% DE | | | |
| | | 3.916% LLDPE2 | | | |
| | | Balance LLDPE1 | | | |
| E15 | 1.2% MB7 | 524 ppm M3 (T812) | Yes | 2 | 38 |
| | | 76 ppm IF1 (PEG) | | | |
| | | 12 ppm AO | | | |
| | | 0.5% DE | | | |
| | | 1.639% LLDPE2 | | | |
| | | Balance LLDPE1 | | | |
| E18 | 4% MB9 | 2400 ppm M5 (J15-B) | No | 18 | 3 |
| | | 40 ppm AO | | | |
| | | 3.756% LLDPE2 | | | |
| | | Balance LLDPE1 | | | |
| E19 | 3% MB9 | 1800 ppm M5 (J15-B) | No | 22 | 16 |
| | | 600 ppm BN | | | |
| | 2% MB15 | 50 ppm AO | | | |
| | | 4.755% LLDPE2 | | | |
| | | Balance LLDPE1 | | | |
| E20 | 3% MB10 | 1800 ppm M6 (CR4000) | No | 3 | -3 |
| | | 30 ppm AO | | | |
| | | 2.817% LLDPE2 | | | |
| | | Balance LLDPE1 | | | |

| | | | | | |
|---|---|---|---|---|---|
| ^{∗}AO content is the calculated antioxidant incorporated via the masterbatches. Any antioxidant present in LLDPE1 and LLDPE2 is not accounted for. The LLDPE2 content comes from the masterbatch carrier. | | | | | |

### Discussion of Experimental Results

Comparative examples CE1 and CE2 demonstrate the good performance of traditional fluoroelastomer process aids for the removal of sharkskin in LLDPE. CE1 shows that a composition of 600 ppm of the FKM1 in LLDPE1, prepared via the masterbatch route (masterbatch CO-MB1), can remove 100% of the melt fracture under the test conditions within one hour. In addition, the output is increased under the same extruder conditions by 27%. CE2 shows the effectiveness of FKM1 in the presence of diatomaceous earth (DE), which is known to be antagonistic to the effect of the fluoroelastomer. While the fluoroelastomer is still able to remove 100% of the melt fracture within one hour the increase in output is modest relative to CE1 where no DE is present.

Comparative examples CE4, and CE5 demonstrate the performance of compositions of commercially available fluorine-free silicone copolymers in LLDPE, prepared via the masterbatch route. CE4 contains 600 ppm of a PDMS-polyurethane copolymer and a PEG synergist in a 9 to 1 ratio in LLDPE1. The formulation reduces the incidence of sharkskin to 39% of the lay flat width of the blown film within 1 hour. The output rate has a reduction of 7%. The composition of CE5 contains 600 ppm of PDMS-polyurethane copolymer and PEG, with a higher ratio of PEG than in CE4. The appearance of sharkskin is reduced to 14% of the lay flat width of the film within 1 hour and the output is increased by 7%. While the compositions of CE4 and CE5 reduced the incidence of melt fracture, they did not eliminate sharkskin completely within 1 hour and do not perform as well as the traditional fluoroelastomers in CE1 and CE2.

The composition in comparative example CE6 demonstrate the performance of another commercially available fluorine-free silicone copolymer. CE6 shows the performance of a composition of 1000 ppm of a low viscosity PDMS-PEG copolymer in LLDPE1. The composition reduces the incidence of sharkskin to 55% of the lay flat width of the blown film within 1 hour. The output rate is reduced by 27%.

Control example C1 shows that 1200 ppm of boron nitride additive does not appear to have any effect on sharkskin in LLDPE1. The incidence of sharkskin was unchanged after 1 hour.

Examples E2, E3, E5 and E7 represent compositions of the present invention based on the M1 copolymer in LLDPE1. The M1 copolymer is a PDMS-poly(oxyalkylene) copolymer. The poly(oxyalkylene) chains are hydroxy terminated. The M1 copolymer has a molecular weigh of 44,000 g/mol and a viscosity of 45,000 cPs. Example E2 shows that 2400 ppm of the copolymer M1 in LLDPE1 reduces sharkskin melt fracture to 28% of its lay flat width within one hour. Output is reduced by 12%. Example E3 shows that 2400 ppm of M1 coupled with 600 ppm of boron nitride shows an improved performance over E2. Sharkskin is reduced to 13% of the blown film lay flat width in one hour and output is reduced by 9%. Example E5 shows the effect of the IF1 (PEG) synergist on the performance of the M1 copolymer. Comparing the composition of E5 with that of E3 we see that replacing 300 ppm of M1 with the IF1 (PEG) results in improved performance. Sharkskin is reduced to 6% of the blown film lay flat width in one hour and the output reduction of only 3%. Comparing Example E7 with Example E5 we see that a reduction in the total content of the M1 copolymer and use of an alternate synergist, IF2 (a liquid phosphite) provides similar reduction in sharkskin to 7% of the layflat width. However, output is reduced by 18%.

Examples E10, E11, E12, E13 and E15 represent compositions of the present invention based on the M3 copolymer in LLDPE. The M3 copolymer is a PDMS-PEG copolymer. The PEG chains are hydroxy terminated. The copolymer has a molecular weigh of 25,000 g/mol and a viscosity of 11,500 cPs.

Example E10 shows that a composition of 1800 ppm of M3 in LLDPE1 is effective at removing sharkskin in the presence of 5000 ppm of diatomaceous earth. DE is known to be antagonistic to traditional fluoroelastomer PPAs and is also expected to be antagonistic in compositions of the present invention. Even in the presence of DE, composition E10 removed sharkskin completely within one hour. Output was reduced by 6%, presumably due to coating or over-lubrication of the metal surfaces of the single screw extruder.

Example E11 shows that a lower concentration of 1000 ppm of M3 in LLDPE1 also effectively removes 100% of the sharkskin in one hour, while increasing output by 25%. The composition of Example 11 compares favourably with the performance the traditional fluoroelastomer in the comparative example CO2. Compared to CO2, the composition of Example 11 provides significantly higher output.

Example 12 shows that a lower loading of 600 ppm of M3 in LLDPE1 reduces sharkskin to only 9% of the lay flat width of the blown film within one hour, and increases output by 23%.

Examples E13, and E15 are based on masterbatch MB7 which is a combination of the M3 copolymer in an approximately 6.9:1 ratio with IF1 (PEG). Comparing Example 13 with Example 10 we see that the effect of replacing part of the M3 in the composition with IF1 provides the same 100% removal of melt fracture in one hour while providing a modest increase in output. Comparing E15 with E12 we see that replacing a portion of the M3 with IF1 provided a significant improvement in output and a very slight difference in sharkskin removal. 98% of sharkskin was removed in one hour in the composition of E15. The Composition of E15 can be compared with the use of traditional fluoroelastomers in the presence of DE in CO2. While the composition of E15 removes 98% of sharkskin as compared to 100% in CO2, the increase in output in E15 is considerably better.

Examples E18 and E19 are based on letdowns of the MB9 masterbatch. The MB9 masterbatch is formulated with the M5 copolymer in LLDPE1. The M5 copolymer is a PDMS copolymer containing quaternary ammonium terminated pendant groups on the copolymer. M5 has an average molecular weight of 18,000 g/mol and a viscosity of 6,000 cPs. The composition of example E18 contains 2400 ppm of M5 in LLDPE1 and reduces sharkskin to 18% of the blown film lay flat width within one hour with little change in output. Example E19 shows that substituting 600 ppm of M5 with boron nitride in the composition showed a similar reduction in sharkskin and increased output by 16% versus the LLDPE1 control

The compositions of example E20 is based on letdowns of masterbatch MB10. MB10 contains the PDMS copolymer M6. M6 is a modified version of the copolymer M5 where a small amount of crosslinking has been introduced. This increases the viscosity of the copolymer to 50,000 cPs. Comparing E20 to E19 we see that this change results in an improved performance in reducing sharkskin. The composition of E20 reduces sharkskin to only 3% of the layflat width of the blown film in an hour. Output is reduced by 3 percent.

## Claims

1. A composition comprising:
(a) a polyolefin; and
(b) 0.01 to 50 wt.-% of a functionalized poly(dialkyl siloxane) copolymer having the formula 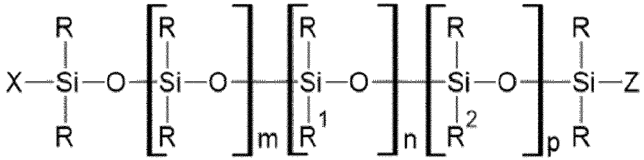
wherein R is an alkyl group containing 1 to 8 carbon atoms, R¹ and R² are the same or different and are either alkyl or poly(oxyalkylene) chains, terminated with a polar or charged functional group selected from an alcohol, a primary or secondary amine, or a combination of primary and secondary amines, an ammonium ion, or a phosphate;
where m is from 1 to 15,000, n is from 0 to 15,000, and p is from 0 to 5000;
where X is R or R¹;
where Z is R or R¹;
with the proviso that when either one or both of X and Z are R¹, then n and p are both 0, and when both X and Y are R, then n is at least 1...

2. A composition as claimed in claim 1 wherein X and Z are not the same.

3. A composition as claimed in claim 1 or 2 wherein the functionalised poly(dialkyl siloxane) copolymer is present in an amount of about 0.01 to 0.5 weight percent.

4. A composition as claimed in claim 1 or 2 wherein the functionalised poly(dialkyl siloxane) copolymer is present in an amount of about 0.5 to 25 weight percent.

5. A composition as claimed in any preceding claim wherein the polar or charged functional group may be-OH; -COO⁻; -NH₂; -NR⁷H; -OPO(OH)₂; -N⁺R⁸H₂; -N⁺R⁸R⁹H or - N⁺R⁸R⁹R¹⁰, in which R⁷ is a substituted or unsubstituted alkyl group, and R⁸, R⁹ and R¹⁰ which may be the same or different, are each independently H or an alkyl group

6. A composition as claimed in any preceding claim selected from a functionalized polydimethylsiloxane with a pendant copolymer structure, telechelic structure, or block copolymer structure of the formulae: 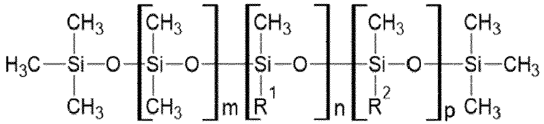 Or 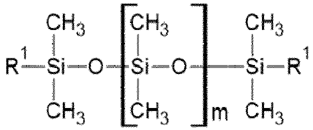 Or

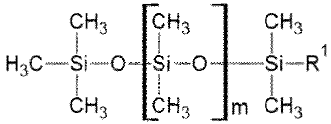

7. A composition as claimed in any preceding claim wherein R is a methyl group.

8. A composition as claimed in any preceding claim wherein the functionalized poly(dialkylsiloxane) is selected from the following compounds:-
(a) 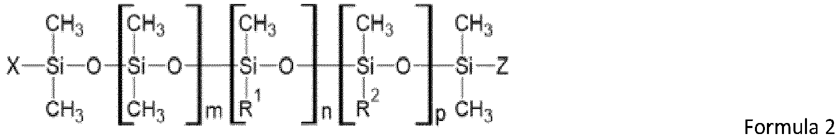
(b) 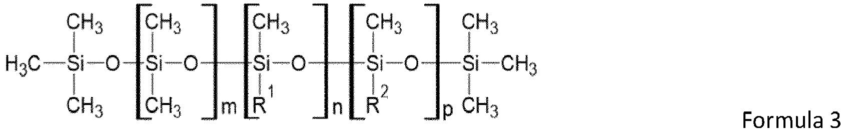
(c) 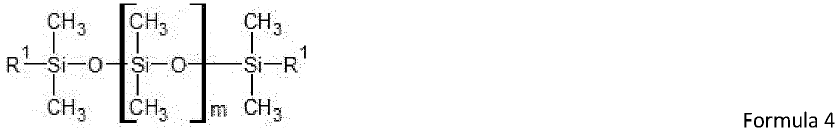
(d) - 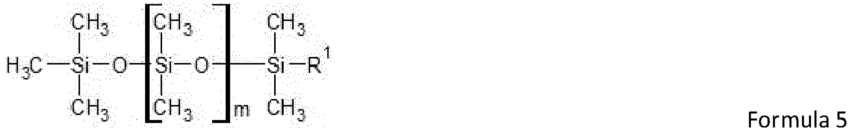
(e) 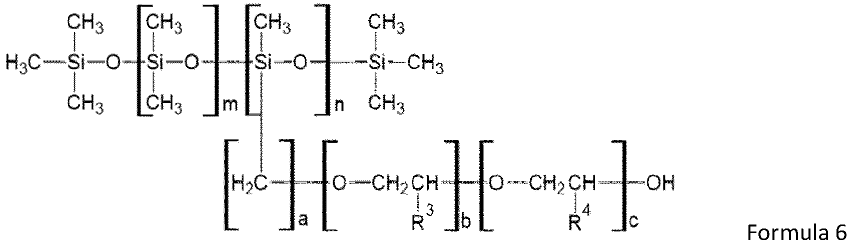 wherein R³ and R⁴ are the same or different and are H or CH₃, and a is from 1 to 200, b, and c are from 0 to 500, m may be from 1 to 15,000 and n may be from 1 to 15,000;
(f) 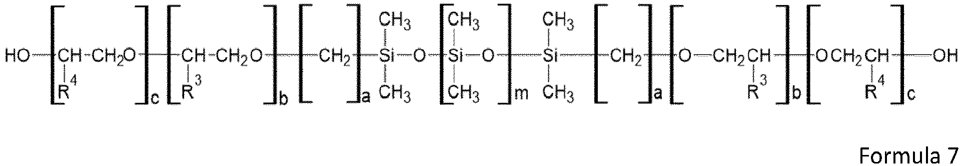 wherein R³ and R⁴ are the same or different and are H or CH₃, m is from 1 to 15,000 and a is from 1 to 200, b, and c are from 0 to 500;
(g) 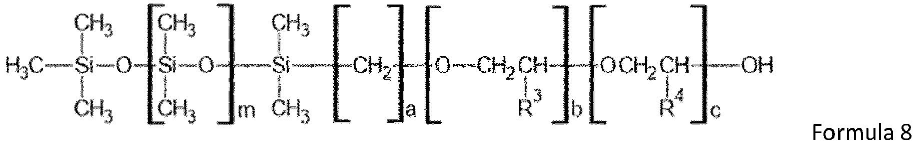 wherein R³ and R⁴ are the same or different and are H or CH₃, m is from 1 to 15,000 and a is from 1 to 200, b, and c are from 0 to 500;
(h) 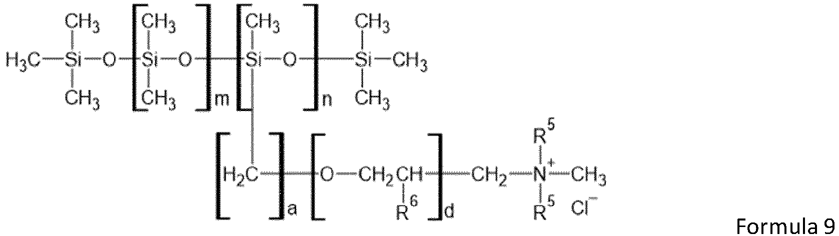 wherein R⁶ is H or OH, R⁵ is a saturated or unsaturated alkyl chain containing 1 to 30 carbon atoms, m is from 1 to 15,000, n is from 1 to 15,000 and a and d are from 1 to 200;
(i) 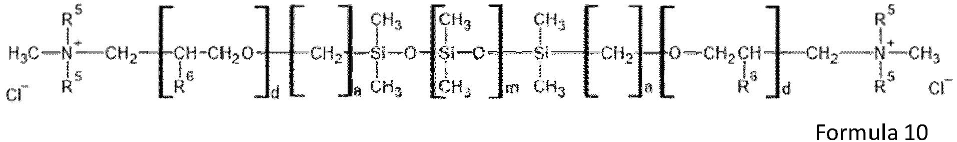 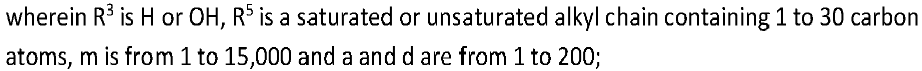
(j) 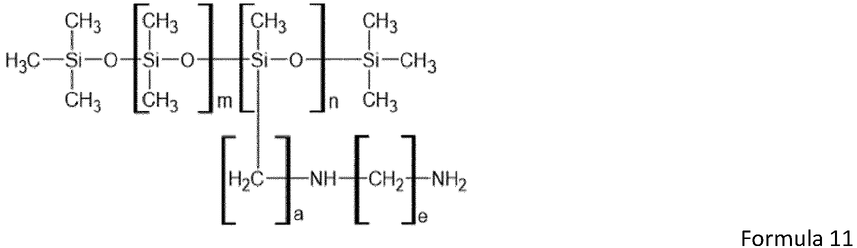 wherein m is from 1 to 15,000, n is from 1 to 15,000 and a and e are from 1 to 200. m may be from 1 to 5000. n may be from 1 to 1000;
(k) 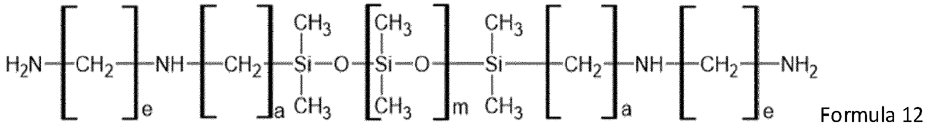 wherein m is from 1 to 15,000 and a and e are from 1 to 200;
(l) 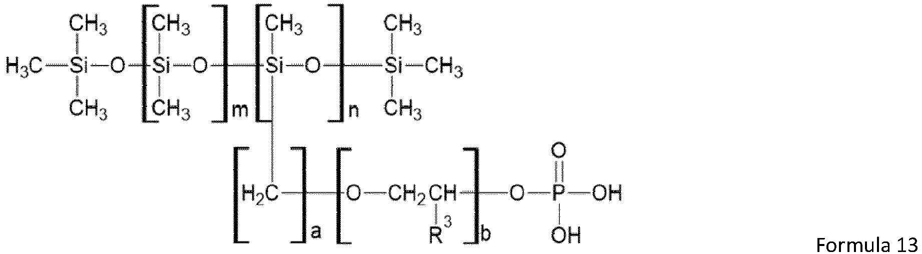 wherein R³ is H or CH₃, m is from 1 to 15,000, n is from 1 to 15,000 and a and b are from 1 to 200;
(m) 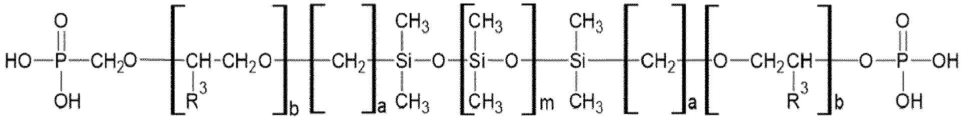 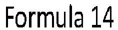 wherein R³ is H or CH₃, m is from 1 to 15,000, and a and b are from 1 to 200.

9. A composition as claimed in any preceding claim further comprising 0.01 to 50 weight-% of the total composition of a synergist selected from a poly(oxyalkylene) or polycaprolactone of between 1,000 and 20,000 grams/mol molecular weight or a polymeric liquid phosphite antioxidant.

10. A composition as claimed in claim 9 wherein the poly(oxyalkylene) is a polyethylene glycol.

11. A composition as claimed in claim 9 or 10 wherein the poly(oxyalkylene) or polycaprolactone has a molecular weight of 2,000 to 10,000 grams/mole.

12. A composition as claimed in claims 9 wherein the polymeric liquid phosphites are selected from Doverphos LGP-11 and Doverphos LGP-12.

13. A composition as claimed in any preceding claim, wherein the polyolefin is selected from a polyethylene, including a high-density polyethylene, linear low-density polyethylene or a low-density polyethylene, or a polypropylene, including a homopolymer polypropylene, random copolymer polypropylene, or a heterophasic impact copolymer polypropylene, or a combination thereof.

14. The composition of any preceding claim where the poly(dialkyl siloxane) block of the poly(dialkyl siloxane) copolymer comprises greater than 25 wt-% of the copolymer.

15. The composition of any of claims 1-13 where the molecular weight of the functionalized poly(di-alkyl siloxane) copolymer is greater than 10,000 g/mol.

16. The composition of claim 9 where in the ratio of synergist to functionalized poly(di-alkyl siloxane) copolymer is between 1:9 and 9:1.

17. The composition of any preceding claim further comprising boron nitride, present in an amount from 0.01 to 10 wt.-% of the composition.

18. Use of a composition as claimed in any preceding claim to reduce sharkskin formation in polyolefin extrusion processes.

19. An extruded polyolefin product whenever produced using the composition of any of claims 1 to 18.
